(19) Europäisches Patentamt
European Patent Office
Office européen des brevets

(11) Publication number: **0 040 321**
**A1**

# (12) EUROPEAN PATENT APPLICATION

(21) Application number: 81102778.8

(22) Date of filing: 10.04.81

(51) Int. Cl.³: **C 07 D 401/14**
C 08 K 5/34, C 08 L 23/00
C 08 L 27/06

(30) Priority: 15.04.80 IT 2136880

(43) Date of publication of application: 25.11.81 Bulletin 81/47

(84) Designated Contracting States: BE CH DE FR GB LI NL

(71) Applicant: Montedison S.p.A.
Patents & Licensing Dept. Foro Buonaparte, 31
I-20121 Milan(IT)

(72) Inventor: Nelli, Giuseppe, Dr.-Chem.
22, via Corridoni
Milan(IT)

(72) Inventor: Oriani, Roberto
12, via Busoni
Milan(IT)

(72) Inventor: Fontanelli, Renzo, Dr.-Chem.
19 via Maiocchi
Milan(IT)

(74) Representative: Schmied-Kowarzik Volker, Dr. et al,
Siegfriedstrasse 8
D-8000 München 40(DE)

## (54) Substituted bis-imidazolidines and their use as stabilizers for polymers.

(57) Substituted bis-imidazolidines having the general formula:

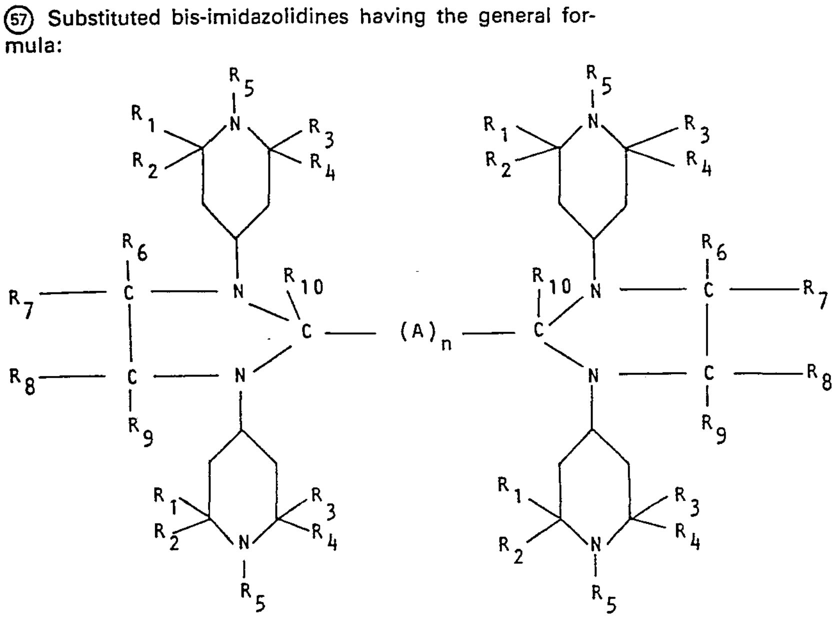

./...

EP 0 040 321 A1

are disclosed. These compounds are useful for stabilizing thermoplastic polymers, in particular polyolefins, against sunlight, heat and oxidation.

Polymeric compositions stabilized with said compounds are also disclosed.

The present invention relates to substituted bis-imidazolidines and to the use thereof as stabilizers of thermoplastic polymeric substances.

It is known that the actinic radiations, particularly in the near ultraviolet region, have a deleterious effect on the appearance and properties of organic polymers. For instance, normally colorless polyesters yellow on exposure to sunlight. The rate of air oxidation of polyolefins is materially accelerated by ultraviolet light. Polystyrene discolors and crack, with accompanying loss of its desirable properties, when exposed to actinic light, etc.

It has been proposed to stabilize polymeric materials against ultraviolet light deterioration by the use of various types of compounds contrasting and preventing such an effect.

Known compounds belonging to such class of stabilizers are the derivatives of 2,2,6,6-tetra-alkyl-piperidine.

In order, however, for a stabilizer to be successfully utilizable in practice, it should not only contain active functional groups but it should also show optimum values for some chemical and physical properties, among which principally volatility, water extraction, solubility and compatibility with the product to be stabilized, diffusibility in the product etc.

Thus, for instance, a highly volatile stabilizer cannot find a useful utilization because it is eliminated or its quantity decreases during the molding or spinning process of the stabilized product. Similarly, even a water-soluble stabilizer does not make it possible to provide protection for a longer period of time, especially not when the sta-

...

bilized product is to get into contact with water during its use.

The object of the present invention is that of providing a compound that, besides having active functional groups, has all the requisites that will render it industrially interesting.

The Applicant has now discovered that the above object is achieved by using substituted bis-imidazolidines having the general formula:

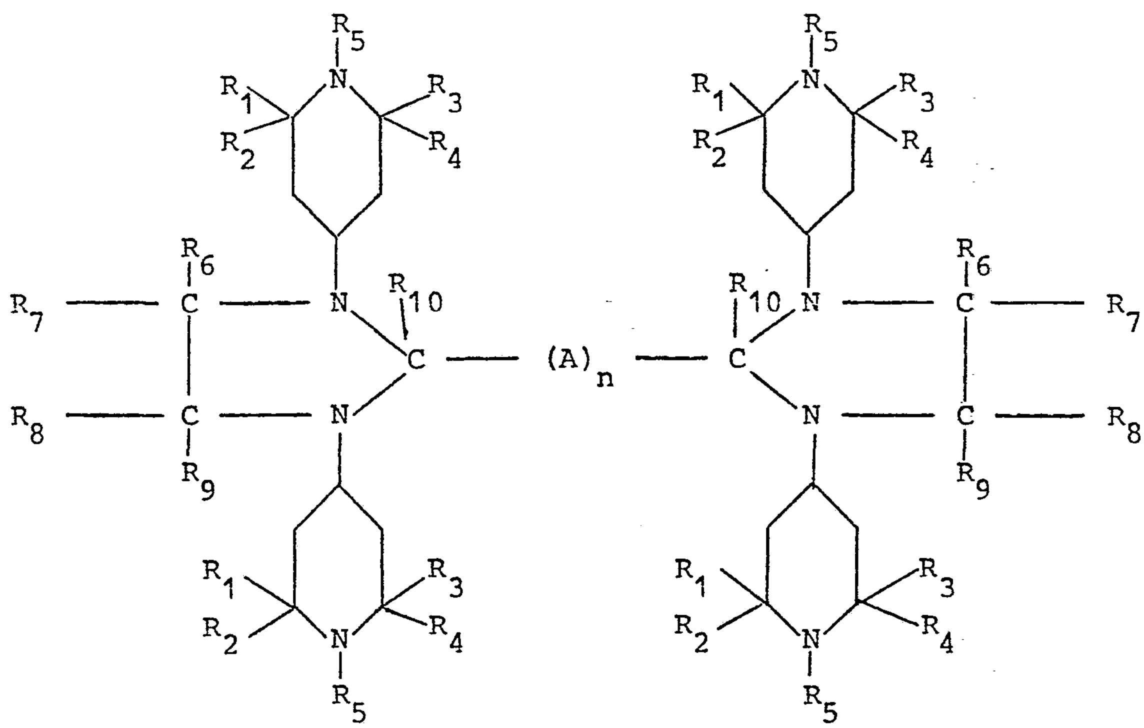

(I)

wherein:

A is an aromatic or alkyl-substituted aromatic radical having from 6 to 18 carbon atoms, a saturated or unsaturated, linear or branched alkylene radical having from 1 to 18 carbon atoms, or a simple or substituted cyclo-alkylene radical having from 3 to 18 carbon atoms;

...

$R_1$, $R_2$, $R_3$ and $R_4$, which may be the same or different, each is an alkyl radical having from 1 to 4 carbon atoms or $R_1$ and $R_2$ together and $R_3$ and $R_4$ together form a cyclo-alkylene radical having from 3 to 12 carbon atoms;

$R_5$ is a hydrogen or an alkyl radical having from 1 to 12 carbon atoms or a cyclo-alkyl radical having from 3 to 12 carbon atoms or an aralkyl radical having from 7 to 18 carbon atoms;

$R_6$, $R_7$, $R_8$, $R_9$ and $R_{10}$, which may be the same or different, are each hydrogen or a linear or branched alkyl radical having from 1 to 6 carbon atoms; and

<u>n</u> may be 0 or 1; when <u>n</u> is 0, the radical $R_{10}$ may be omitted and in such a case the two carbons, containing $R_{10}$ radical, are linked to each other by a double bond.

The present invention provides, too, compositions based on thermoplastic synthetic polymers, stabilized to ageing and oxidation, containing, as a stabilizer, a substituted bis-imidazolidine having general formula (I) indicated herein before in an amount sufficient to prevent any degrading action of the polymer.

The present preferred substituted bis-imidazolidines, having general formula (I), for use in the embodiment of the present invention are those in which: A is an alkylene having from 2 to 6 carbon atoms, a phenylene radical or a methyl-phenylene radical; $R_1$, $R_2$, $R_3$ and $R_4$ are each a methyl; $R_5$ is hydrogen or a methyl; and $R_6$, $R_7$, $R_8$, $R_9$ and $R_{10}$ are each hydrogen.

The compounds of general formula (I) may be synthesized according to any conventional method known in the literature.

...

Thus, for instance, the compounds having general formula (I) can be synthesized by reacting a di-aldehyde with N,N'--di(2,2,6,6-tetra-alkyl-4-piperidyl)ethylene-diamine, according to the following reaction scheme:

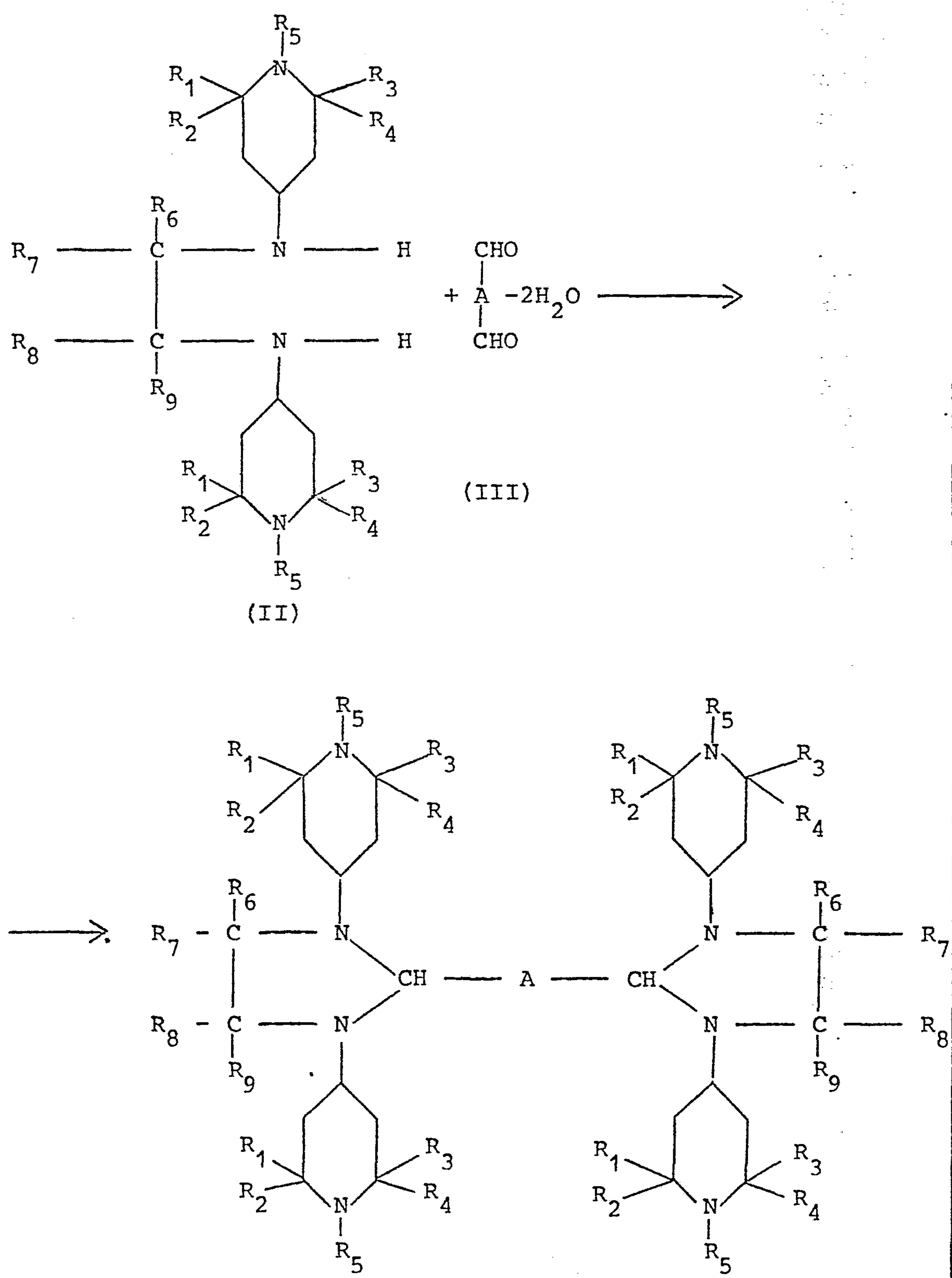


(III)

(II)

(I)

The condensation reaction is carried out by heating the mixture of the two reactants (II) and (III), in either the presence or absence of a solvent or a dispersant or of a dehydrating agent which, by absorbing the condensation water, facilitates the completion of the reaction.

The substituted ethylen-diamine (II) may be synthesized according to any conventional method known in the literature such as, for instance, by hydrogenating, under pressure and in the presence of a hydrogenation catalyst such as platinum, an ethylene-diamine and an alkyl-substituted-4-piperidone mixture, according to the following reaction scheme:

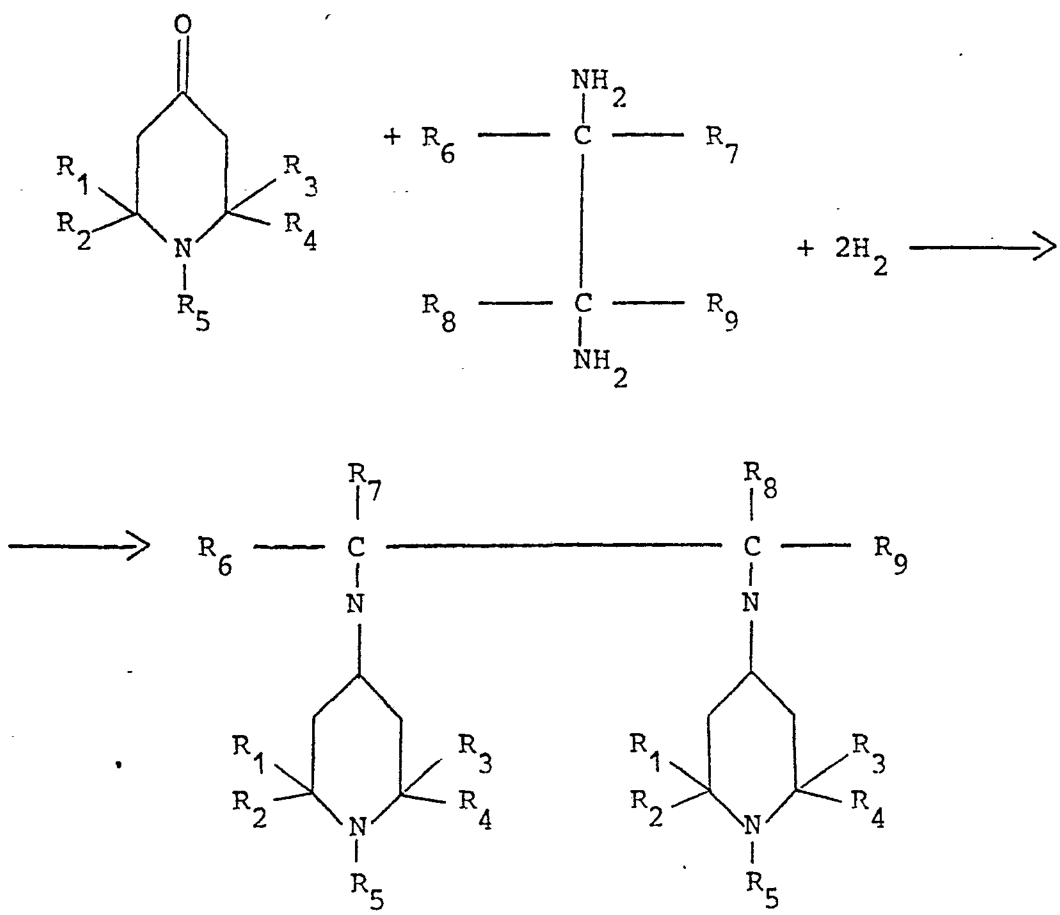

(II)

...

The substituted bis-imidazolidines of general formula (I) may be used as stabilizers of organic materials usually subject to degradation due to the action of heat, oxygen and attinic light.

The materials which can be stabilized with the above-reported compounds are mainly synthetic polymeric organic substances which include, for instance:

- polyolefins, such as olefin homopolymers, among which high and low density polyethylene, polypropylene, polystyrene, polybutadiene, polyisoprene, and the likes; and copolymers of the olefins with other ethylenically unsaturated monomers, such as ethylene-propylene copolymers, styrene-butene copolymers, styrene-butadiene copolymers, styrene-acrylonitrile copolymers and acrylonitrile-styrene-butadiene copolymers;
- polyvinyl chloride and polyvinylidene chloride, including both the homopolymers and copolymers of vinyl chloride and of vinylidene chloride with each other or each of them with vinyl acetate or with other ethylenically unsaturated monomers;
- polyacetals, such as polyoxymethylene and polyoxyethylene;
- polyesters, such as polyethylene terephtalates;
- polyamides, such as Nylon 6, Nylon 6-6 and Nylon 6-10;
- polyurethanes;
- polycarbonates;
- butadiene-styrene copolymers;
- natural and synthetic rubbers, etc.

Such synthetic polymers can be used in the form of powder, granules, or shaped articles such as, for example, fi-

...

bres, films, sheets and other shaped articles or latexes or foams.

Among the above synthetic polymers, the most suitable ones for being used according to this invention, are the polyolefins deriving from monomers having general formula: $R-CH=CH_2$, wherein R is an alkyl or aryl group, or hydrogen.

The present preferred polyolefin is polypropylene consisting prevailingly of isotactic macromolecules and obtained by polymerization of propylene, in the presence of stereospecific catalyst.

The amount of substituted bis-imidazolidine, having general formula (I), to be added to the substance to be stabilized, according to this invention, is not critical and may vary in a wide range as function of the type, properties and particular uses of the substance. Generally, said stabilizers can be added in amounts ranging from 0.01 to 5.0% by weight; in practice, however, the effective amount varies as a function of the type of substance to be stabilized. Thus, for example, in the case of polyolefins, the effective amount can range from 0.01% to 2% by weight, in the case of polyvinyl and polyvinylidene chloride, such amount can range from 0.01% to 1% by weight; while, in the case of polyurethanes and polyamides, such amount may range from 0.01% to 5% by weight.

The stabilizer having general formula (I) may be employed either alone or in admixture with other known additives such as: anti-oxidizers, ultraviolet ray absorbers, pigments, fillers, basic nitrogen containing polycondensates, other stabilizers, etc.

...

Some examples of such additives are oxi-benzo-triazoles, oxi-benzo-phenones, Ni-stabilizers, metal soaps, phenolic antioxidants, phosphites, thioesters, hydroquinone derivatives, triazine compounds, acyl-amino-phenols, benzyl-phosphonates, etc.

Such additives may be used along with the substituted bis-imidazolidines, having general formula (I), according to the present invention, in a ratio by weight ranging from 0.5:1 to 3:1.

The compounds having general formula (I) or the mixture containing said compounds can be incorporated into the synthetic polymer or the substance to be stabilized according to any known procedure and at any stage either before or after polymerization or during the manufacture of the shaped article from the polymer. Thus, for example, it is possible to effect a simple admixing of the additives in powder form, under stirring, to the polymer; or the polymer can be mixed together with a solution of the stabilizers in a suitable solvent, which will successively be evaporated; or the stabilizers can be added to the polymer at the end of the polymerization process.

Furthermore, it is possible to get the stabilizing action by applying the stabilizer on the manufactured article, for example, by dipping it into a solution or dispersion of the stabilizer, and then by evaporating the solvent or the dispersant, or by dissolving the stabilizer in a suitable solvent and then by spraying the solution on the surface of the manufactured article.

The following non-limiting examples are given for a more

...

detailed understanding of the present invention and for further enabling those skilled in the art to practice the same.

In the example, the parts are given by weight, unless otherwise specified.

EXAMPLE No. 1:

2,2'-p-phenylene-bis/1,3-di-(2,2,6,6-tetramethyl-4-piperidyl)/-imidazolidine.

50.5 g of N,N'-di-(2,2,6,6-tetra-methyl-4-piperidyl)-ethylendiamine and 10 g of terephthalic dialdehyde were introduced into a 250 ml reactor. After having evacuated the oxygen from the reactor by repeated introduction and evacuation of nitrogen, the mixture was heated up to melting point. Thereupon, the mixture was additioned with 100 ml of toluene and the solution thus obtained was then heated up to boiling point. The developed vapours were gathered and condensed in a Marcusson water separator. The heating of the mixture was continued until the vapors did not contain any more water.

By cooling the residual solution in the reactor, a precipitate was obtained which was filtered and crystallized by ethyl acetate. Thereby a white crystalline powder was obtained showing a melt point of 263°C. On the basis of the nuclear magnetic resonance (N.M.R.), nitrogen percentage, molecular weight and of the mass-spectrum analyses, to the obtained product the following structural formula was attributed:

...

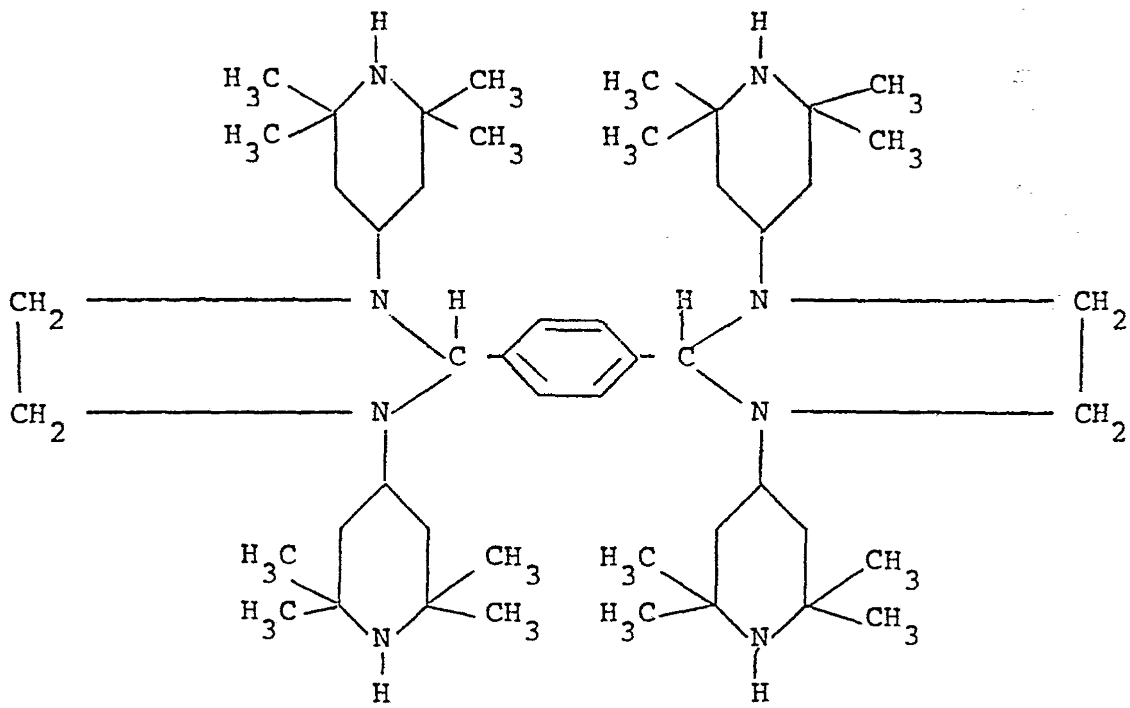

EXAMPLE 2:

The process modalities of example 1 were repeated, by reacting 34 g of N,N'-di-(2,2,6,6-tetra-methyl-4-piperidyl)-ethylene-diamine with 5 g of glutaric dialdehyde. A white powder was obtained showing a melt point of 124°-125°C, and to which, through analyses of N.M.R., nitrogen percentage, mass-spectrum and molecular weight, the following structural formula was attributed:

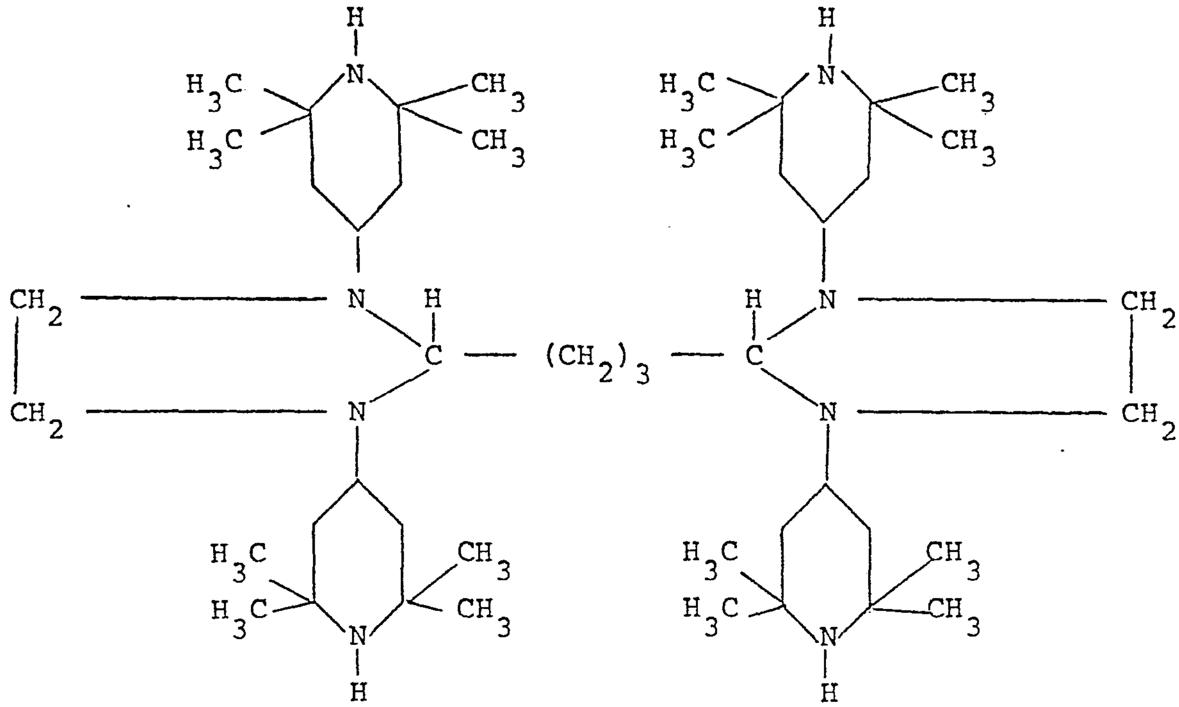

Stabilization tests.

200 cc of chloroform, containing dissolved therein one of the compounds of examples 1 and 2 in amounts as indicated in the Table, were added to 300 g of non-stabilized polypropylene, having an intrinsic viscosity, measured in tetraline at 130°C, of 162 cc/g, a residue, after the extraction of the crude polymerizate with n-heptane, of 96.5% and an ash content of 80 ppm.

Each mixture was stirred for about 6 hours at room temperature, in a rotary evaporator and then dried at 50°C, at 0,01 mm of Hg, for 1 hour.

The additioned powder so obtained was extruded through a Brabender extruder, at 220°C, and granulated. The granules were transformed into films having an uniform thickness of 50-60 microns.

...

On the films so produced, the thermo-oxidative and the photo-oxidative stabilities were determined.

The thermo-oxidative stability was determined by measuring the induction period (IP), considered as the time required for getting a quick increase of the oxygen absorbing rate, at different temperatures and under a pressure of 760 mm of Hg of oxygen.

To determine the induction period of the thermo-oxidation, 0.2 g of the above film were cut up into pieces and introduced into a cell of about 50 $cm^3$ in which an oxygen atmosphere was created by repeatedly removing and introducing oxygen. The cell was then immersed into a thermostatically heat-stabilized bath, maintained at the wanted temperature, and connected with an oxygen absorption measuring device, equipped with recording systems of the absorbed volumes.

As photo-oxidative stability, the embrittlement time was measured. As embrittlement time was considered the time required to cause the rupture of the film by only one bending at 180° after exposure to the Xenotest 1200, under the following operative conditions:

- temperature of the black panel = 45°C;
- relative humidity = 50%;
- alternate exposure to the maximum ultraviolet intensity.

The values of the induction period (IP) and of the embrittlement time to the Xenotest, are recorded on the following table:

...

TABLE

| Compound of example Nr. | % by weight | Thermo-oxidative stability in h | | Photo-oxidative stability in h |
|---|---|---|---|---|
| | | at 170°C | at 150°C | |
| - | - | 0 | 24 | 100 |
| 1 | 0.3 | 13 | 300 | 1100 |
| 1 | 0.5 | 18 | 490 | 1800 |
| 2 | 0.5 | 16 | 420 | 1900 |

...

CLAIMS

1) Substituted bis-imidazolidines of the general formula:

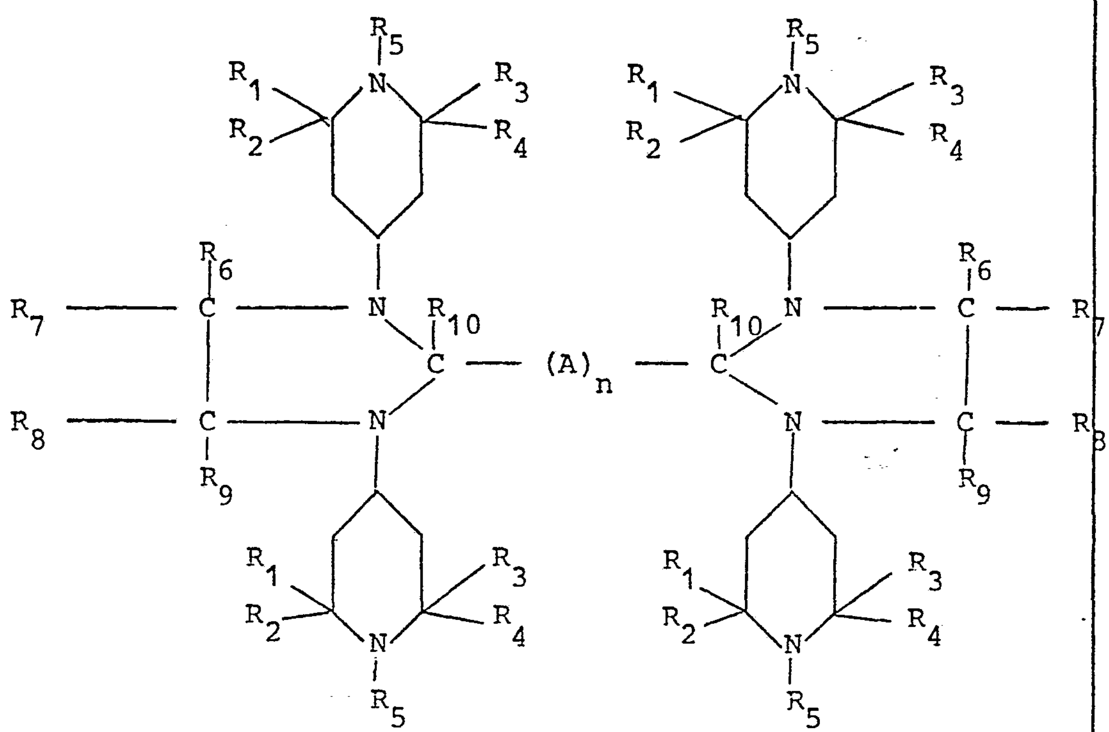

(I)

wherein:

A is an aromatic or an alkyl-substituted aromatic radical having from 6 to 8 carbon atoms, a saturated or unsaturated, linear or branched alkylene radical having from 1 to 18 carbon atoms, or a simple or substituted cyclo--alkylene radical having from 3 to 18 carbon atoms;

$R_1$, $R_2$, $R_3$ and $R_4$, which may be the same or different, are each an alkyl radical having from 1 to 4 carbon atoms, or $R_1$ and $R_2$ together and $R_3$ and $R_4$ together form a cyclo-alkylene radical having from 3 to 12 carbon atoms;

$R_5$ is hydrogen or an alkyl or alkylene radical having from 1 to 12 carbon atoms or a cyclo-alkyl radical hav-

...

ing from 3 to 12 carbon atoms, or an aralkyl radical having from 7 to 18 carbon atoms;

$R_6$, $R_7$, $R_8$, and $R_9$, which may be the same or different, are each hydrogen or a linear or branched alkyl radical having from 1 to 6 carbon atoms;

n is a whole number comprised between 0 and 1; when n is 0, radical $R_{10}$ may be omitted and in such a case the two carbon atoms, containing $R_{10}$ radical, are linked to each other by a double bond.

2) Substituted bis-imidazolidines of the general formula (I), according to claim 1, wherein:

A is an alkylene having from 2 to 6 carbon atoms, a phenylene or a methyl-phenylene radical;

$R_1$, $R_2$, $R_3$ and $R_4$ are each a methyl;

$R_5$ is a methyl or hydrogen; and

$R_6$, $R_7$, $R_8$, $R_9$ and $R_{10}$ are each hydrogen.

3) Compositions of thermoplastic synthetic polymers, stabilized to oxidation, heat and light, having incorporated therein, in an amount sufficient to prevent any degradation of the polymer, a substituted bis-imidazolidine of the general formula:

...

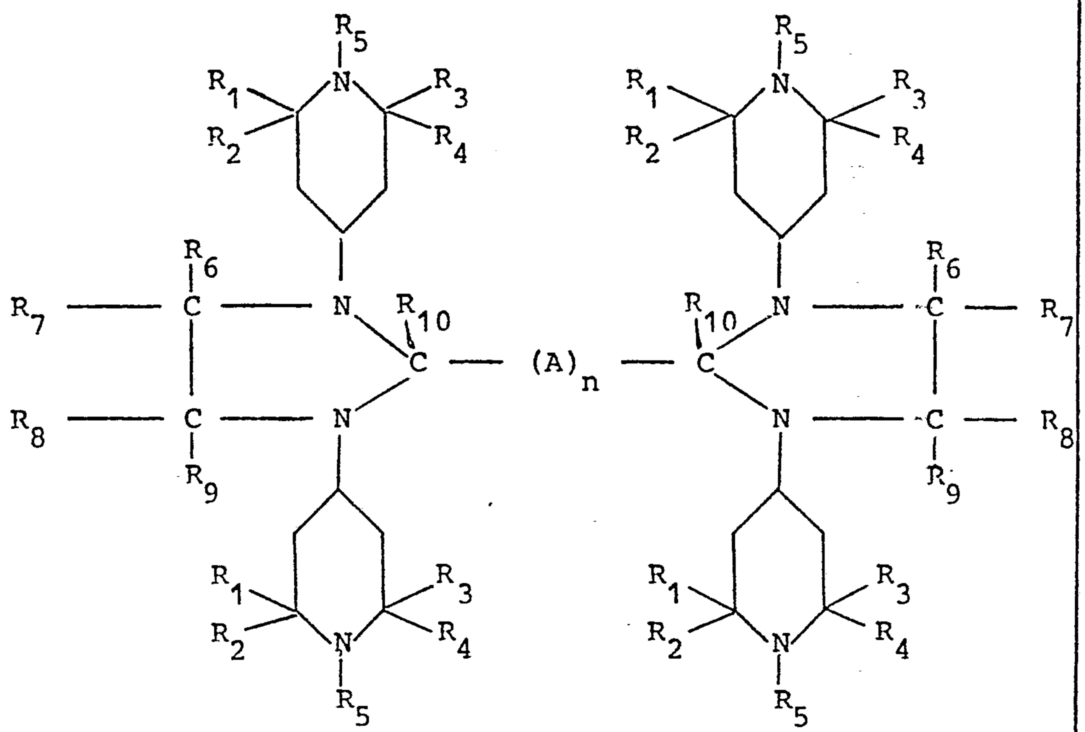

(I)

wherein:

A is an aromatic or an alkyl-substituted aromatic radical having from 6 to 8 carbon atoms, a saturated or unsaturated, linear or branched alkylene radical having from 1 to 18 carbon atoms, or a simple or substituted cyclo-alkylene radical having from 3 to 18 carbon atoms;

$R_1$, $R_2$, $R_3$ and $R_4$, which may be the same or different, are each an alkyl radical having from 1 to 4 carbon atoms, or $R_1$ and $R_2$ together and $R_3$ and $R_4$ together form a cyclo-alkylene radical having from 3 to 12 carbon atoms;

$R_5$ is hydrogen or an alkyl radical having from 1 to 12 carbon atoms or a cyclo-alkyl radical having from 3 to 12 carbon atoms, or an aralkyl radi-

...

cal having from 7 to 18 carbon atoms;

$R_6$, $R_7$, $R_8$, and $R_9$, which may be the same or different, are each hydrogen or a linear or branched alkyl radical having from 1 to 6 carbon atoms;

n is a whole number comprised between 0 and 1; when n is 0, radical $R_{10}$ may be omitted and in such a case the two carbon atoms, containing $R_{10}$ radical, are linked to each other by a double bond.

4) Compositions according to claim 3, wherein the substituted-imidazolidines having general formula (I) are present in an amount ranging from 0.01% to 5% by weight on the weight of the polymer.

5) Compositions according to claim 3 or 4 wherein the synthetic thermoplastic polymer is polyolefin.

6) Compositions according to claim 5, wherein the polyolefin is polypropylene consisting prevailingly of isotactic macromolecules.

7) Compositions according to claim 5 or 6, wherein the substituted-imidazolidines having general formula (I) are present in an amount ranging from 0.01% to 2% by weight on the weight of the polyolefin.

8) Compositions according to claim 3 or 4, wherein the thermoplastic synthetic polymer is polyvinylchloride or polyvinylidene chloride.

9) Compositions according to claim 8, in which the substituted-imidazolidines having general formula (I) are present in an amount ranging from 0.01% to 1% by weight on the weight of the polymer.

10) Compositions according to claim 3 or 4, in which the

...

thermoplastic synthetic polymer is a polyurethane or a polyamide.

11) Compositions according to claim 10, in which the substituted-imidazolidines having general formula (I) are present in an amount ranging from 0.01 to 5% by weight on the weight of the polymer.

12) Compositions according to claim 3, in which the substituted-imidazolidines having general formula (I) are employed in admixture with other known additives selected from the group consisting of: anti-oxidants, U.V. radiation absorbers, pigments, fillers, basic nitrogen containing polycondensates and auxiliary stabilizers.

13) Compositions according to claim 12, in which the ratio by weight of the known additives to the substituted-imidazolidines having general formula (I) is from 0.5:1 to 3:1.

0040321

European Patent Office

# EUROPEAN SEARCH REPORT

Application number
EP 81102778.8

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | GB - A - 1 424 923 (BAYER)<br>+ Pages 1,2 +<br>-- | 1 | C 07 D 401/14<br>C 08 K 5/34<br>C 08 L 23/00<br>C 08 L 27/06 |
| | GB - A - 2 027 023 (CHIMOSA) (13-02-1980)<br>+ Abstract; page 10 +<br>-- | 1,3,5,6,11,12 | |
| A | GB - A - 1 202 298 (SANKYO)<br>+ Claims 1-7 +<br>---- | 3,5,6,8,10 | |

TECHNICAL FIELDS SEARCHED (Int. Cl.3)

C 07 D 401/00
C 08 K 5/00
C 08 L 23/00
C 08 L 27/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 03-07-1981 | BRUS |

EPO Form 1503.1 06.78